# EUROPEAN PATENT APPLICATION

(11) **EP 4 231 499 A1**
(43) Date of publication of application: **23.08.2023**
(21) Application number: 20961803.2
(22) Date of filing: 17.11.2020
(51) Int. Cl.: H02J 50/10

(54) **WIRELESS CHARGING DEVICE AND TERMINAL DEVICE**

(71) Applicant: Huawei Technologies Co., Ltd., Shenzhen, Guangdong 518129 (CN)
(72) Inventor: GAO, Lixu, Shenzhen, Guangdong 518129 (CN); HUANG, Dongqi, Shenzhen, Guangdong 518129 (CN)
(74) Representative: Gill Jennings & Every LLP
(86) International application number: PCT/CN2020/129372
(87) International publication number: WO 2022/104511

(57) **Abstract**

A wireless charging device and a terminal device are provided. The wireless charging device (10) includes a first receiver circuit (021) and a second receiver circuit (022). The first receiver circuit (021) includes a parallel resonant circuit, where the parallel resonant circuit is configured to receive a first electromagnetic induction signal from a transmitter circuit (01), and form a parallel resonant loop based on the first electromagnetic induction signal to trigger the transmitter circuit (01) to transmit a second electromagnetic induction signal. The second receiver circuit (022) is coupled to a load, and is configured to receive the second electromagnetic induction signal from the transmitter circuit (O1), generate electric energy based on the second electromagnetic induction signal, and provide the electric energy to the load to charge the load. The wireless charging device (10) can stably charge the load.

## Description

### TECHNICAL FIELD

Embodiments of this application relate to the field of circuit technologies, and in particular, to a wireless charging device and a terminal device.

### BACKGROUND

With development of electronic technologies, performance of a mobile device is increasingly improved. More users like to use a mobile device to perform various tasks. In this case, power consumption of the mobile device is too high and the mobile device needs to be charged in time. To improve charging convenience of the mobile device, wireless charging technologies applied to the mobile device emerge and are widely used. When the wireless charging technologies are used to charge the mobile device, the mobile device may be directly placed on a charging base to complete charging without connecting the mobile device to a power adapter by using a cable.

In conventional wireless charging technologies, usually, an electromagnetic coupling principle is used to transfer electric energy from a coil in the charging base to a coil in the mobile device, to charge the mobile device. Two ends of the coil in the mobile device are coupled with a capacitor to form a parallel resonant circuit with the coil, so that the charging base identifies the mobile device to charge the mobile device. A resonance frequency of the foregoing parallel resonant circuit needs to be about 1 MHz according to a specification in the Qi protocol introduced by a standard organization of low frequency wireless power transmission (WPC, wireless power consortium). When the charging base identifies the mobile device to charge the mobile device, the parallel resonant circuit whose resonance frequency is about 1 MHz may affect stability of another component in an electric energy receiver circuit. Therefore, how to ensure the operation stability of the another component in the electric energy receiver circuit becomes a problem that needs to be resolved.

### SUMMARY

A wireless charging device and a terminal device provided in this application can improve stability of the wireless charging device.

To achieve the foregoing objective, the following technical solutions are used in this application.

According to a first aspect, an embodiment of this application provides a wireless charging device. The wireless charging device includes a first receiver circuit and a second receiver circuit. The first receiver circuit includes a parallel resonant circuit, where the parallel resonant circuit is configured to receive a first electromagnetic induction signal from a transmitter circuit, and form a parallel resonant loop based on the first electromagnetic induction signal to trigger the transmitter circuit to transmit a second electromagnetic induction signal. The second receiver circuit is coupled to a load, and is configured to receive the second electromagnetic induction signal from the transmitter circuit, generate electric energy based on the second electromagnetic induction signal, and provide the electric energy to the load to charge the load.

The transmitter circuit is triggered to convert from transmitting the first electromagnetic induction signal to transmitting the second electromagnetic induction signal according to the Qi protocol introduced by a standard organization of low frequency wireless power transmission (WPC, wireless power consortium). Specifically, according to a specification in the Qi protocol, a resonance frequency of the parallel resonant circuit in the first receiver circuit is 1 MHz. In other words, the parallel resonant circuit whose resonance frequency is about 1 MHz forms the parallel resonant loop based on the first electromagnetic induction signal. When an induced current in the parallel resonant loop in turn affects the transmitter circuit, and after the effect is detected by the transmitter circuit, the transmitter circuit is triggered to transmit the second electromagnetic induction signal. When another induced current in a parallel resonant circuit whose resonance frequency is far away from 1 MHz in turn affects a primary coil, the transmitter circuit is not triggered to transmit the second electromagnetic induction signal.

In a possible implementation, the second electromagnetic induction signal includes an alternating current, and a frequency range of the alternating current is 110 kHz to 205 kHz.

In this embodiment of this application, the first receiver circuit and the second receiver circuit are disposed. In other words, a part used to respond to the transmitter circuit to be identified by the transmitter circuit is independent of a transmission path used to transmit the electric energy to the load, so that generation of a parallel resonant loop on the transmission path that is in the receiver circuit and that outputs the electric energy to the load can be avoided. Alternatively, a resonance frequency of the parallel resonance loop generated on a transmission path that is in the receiver circuit and that outputs the electric energy to the load is set to a value away from 1 MHz, to help improve stability of the receiver circuit.

In a possible implementation, the parallel resonant circuit includes a first secondary coil and a first capacitor, where the first capacitor is coupled to two ends of the first secondary coil.

In a possible implementation, the second receiver circuit further includes a first series resonant circuit and a first rectifier bridge. The first series resonant circuit generates a first alternating current based on the second electromagnetic induction signal, and provides the first alternating current to the first rectifier bridge. The first rectifier bridge generates a first direct current based on the first alternating current, and provides the first direct current to the load.

In a possible implementation, the first rectifier bridge includes a plurality of first transistors. The second receiver circuit further includes a drive circuit configured to drive the plurality of first transistors to be turned on or off. The drive circuit and the plurality of first transistors are integrated into a same chip.

In a possible implementation, the first receiver circuit further includes a second series resonant circuit and a second rectifier bridge. The second series resonant circuit generates a second alternating current based on the second electromagnetic induction signal, and provides the second alternating current to the second rectifier bridge. The second rectifier bridge generates a second direct current based on the second alternating current to supply power to the chip.

By using the first receiver circuit to supply power to a secondary coil, a capability of supplying power to the foregoing chip can be enhanced, so that the second receiver circuit can stably supply power to the load.

In a possible implementation, the first series resonant circuit includes a second secondary coil and a second capacitor. One end of the second secondary coil is coupled to a first input end of the first rectifier bridge by using the second capacitor, and the other end of the second secondary coil is coupled to a second input end of the first rectifier bridge.

In a possible implementation, the second receiver circuit further includes a third capacitor. One end of the third capacitor is coupled to the one end of the second secondary coil by using the second capacitor, and the other end of the third capacitor is coupled to the other end of the second secondary coil.

In a possible implementation, the second series resonant circuit includes the first secondary coil and a fourth capacitor. The fourth capacitor is coupled between one end of the first secondary coil and a first input end of the second rectifier bridge. The other end of the first secondary coil is coupled to a second input end of the second rectifier bridge.

In a possible implementation, the wireless charging device further includes the transmitter circuit. The transmitter circuit is configured to transmit the first electromagnetic induction signal, and transmit the second electromagnetic induction signal when a change of the first electromagnetic induction signal is detected.

In a possible implementation, the transmitter circuit includes an inverter and a third series resonant circuit. The inverter is configured to convert a direct current input by a power supply into an alternating current and provide the alternating current to the third series resonant circuit. The third series resonant circuit generates the first electromagnetic induction signal and the second electromagnetic induction signal based on the alternating current output by the inverter.

In a possible implementation, a third series resonance includes a primary coil and a fifth capacitor. One end of the primary coil is coupled to a first output end of the inverter by using the fifth capacitor, and the other end of the primary coil is coupled to a second output end of the inverter.

According to a second aspect, an embodiment of this application provides a terminal device. The terminal device includes the first receiver circuit and the second receiver circuit in the wireless charging device according to the first aspect. In addition, the terminal device further includes a load. The load is coupled to an output end of the second receiver circuit. The second receiver circuit is configured to charge the load.

The load herein may include but is not limited to a battery, various processors that drive a terminal device to run, or another type of component, for example, a graphics processing unit (Graphics Processing Unit, GPU), a central processing unit (Central Processing Unit, CPU), an operation accelerator, or various digital circuits and analog circuits. Alternatively, a load 40 may be various integrated circuit chips. The integrated circuit chip includes but is not limited to an artificial intelligence chip, an image processing chip, and the like.

### BRIEF DESCRIPTION OF DRAWINGS

To describe technical solutions in embodiments of this application more clearly, the following briefly introduces the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of an application scenario of a wireless charging device according to an embodiment of this application;
FIG. 2 is a schematic structural diagram of a wireless charging device according to an embodiment of this application;
FIG. 3 is a schematic structural diagram of a wireless charging device in a conventional technology;
FIG. 4 is a schematic structural diagram of a second receiver device according to an embodiment of this application;
FIG. 5 is another schematic structural diagram of a second receiver device according to an embodiment of this application;
FIG. 6 is a schematic structural diagram of a first receiver device according to an embodiment of this application; and
FIG. 7 is a schematic structural diagram of an electric energy transmitter device according to an embodiment of this application.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "first", "second", or the like mentioned in this specification does not indicate any order, quantity, or importance, but is used only to distinguish between different components. Likewise, the term "alan", "one", or the like does not indicate a quantity limitation either, but indicates at least one. The term "connection", "coupling", or the like is not limited to a physical or mechanical connection, but may include an electrical connection, whether directly or indirectly. It is equivalent to a connection in a broad sense.

In embodiments of this application, a word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, using of the word such as "example" or "for example" is intended to present a related concept in a specific manner. In the descriptions of embodiments of this application, unless otherwise stated, "a plurality of" means two or more than two. For example, a plurality of transistors mean two or more transistors.

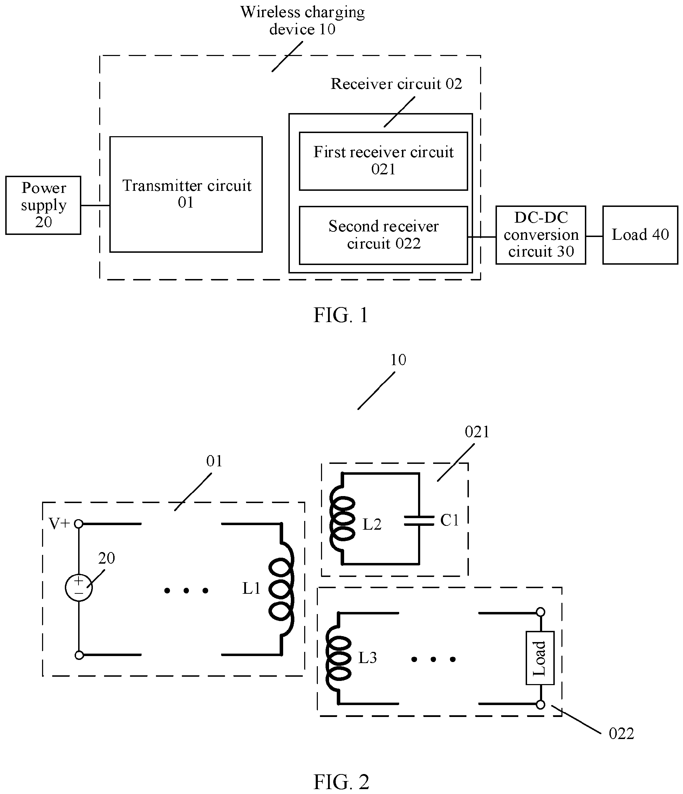

FIG. 1 is a schematic diagram of an application scenario of a wireless charging device 10 according to an embodiment of this application. The wireless charging device shown in this embodiment of this application may be used in a terminal device. The terminal device may include but is not limited to a mobile phone, a wearable device, an electric toothbrush, a tablet computer, and the like. As shown in FIG. 1, the wireless charging device includes two parts: a transmitter circuit 01 and a receiver circuit 02. Usually, the receiver circuit 02 is disposed in the terminal device, and the transmitter circuit 01 is independent of the terminal device. The transmitter circuit 01 and the receiver circuit 02 in the wireless charging device may be separately produced and sold. For example, the transmitter circuit 01 and a voltage conversion circuit are disposed in a same product (for example, a wireless charging base) for sale, and the receiver circuit 02 is disposed in a terminal device for sale.

As shown in FIG. 1, the transmitter circuit 01 may be coupled to a power supply 20. The power supply 20 may be a voltage source that provides a direct current. In a specific application scenario, the power supply 20 may include a home access network and a voltage conversion circuit (for example, a power adapter), and the transmitter circuit 01 is coupled to the home access network by using the voltage conversion circuit. The voltage conversion circuit converts an alternating current provided by the home access network into a direct current, and provides the direct current to the transmitter circuit 01 to supply power to the transmitter circuit O1. In addition, the power supply 20 may further include a battery, and the battery may also directly provide the direct current to the transmitter circuit 01. Usually, a voltage provided to the transmitter circuit 01 may be adjustable from ten volts to tens of volts.

As shown in FIG. 1, the receiver circuit 02 includes a first receiver circuit 021 and a second receiver circuit 022. An output end of the second receiver circuit 022 is coupled to a load 40 to charge the load 40. The load 40 herein may include but is not limited to a battery, various processors that drive a terminal device to run, or another type of component, for example, a graphics processing unit (Graphics Processing Unit, GPU), a central processing unit (Central Processing Unit, CPU), an operation accelerator, or various digital circuits and analog circuits. Alternatively, the load 40 may be various integrated circuit chips. The integrated circuit chip includes but is not limited to an artificial intelligence chip, an image processing chip, and the like. It should be noted that, the second receiver circuit 022 usually cannot be directly coupled to a load such as a battery, a processor, or a chip, and is usually coupled to the load 40 through a direct current-direct current (Direct current-Direct current, DC-DC) conversion circuit 30 shown in FIG. 1. The DC-DC conversion circuit 30 is configured to convert a voltage output by the second receiver circuit 022 into a voltage needed for charging or running the load 40 to supply power to the load 40. The DC-DC conversion circuit 30 may include but is not limited to an inductive voltage conversion circuit such as a buck (Buck) circuit, a boost (Boost) circuit, or a boost-buck (Boost-Buck) circuit, and may further include a capacitive voltage conversion circuit such as a switched capacitor circuit. The DC-DC conversion circuit is not specifically limited in this embodiment of this application.

Based on the application scenario shown in FIG. 1, refer to FIG. 2. FIG. 2 is a schematic structural diagram of a wireless charging device. As shown in FIG. 2, a transmitter circuit 01 includes a primary coil L1, a first receiver circuit 021 includes a secondary coil L2, and a second receiver circuit 022 includes a secondary coil L3. The primary coil L1 is coupled to the secondary coil L2 and the secondary coil L3 separately. In a first possible implementation, the secondary coil L2 and the secondary coil L3 are separate coils. In a second possible implementation, the secondary coil L2 and the secondary coil L3 may be two groups of coils formed by leading a plurality of taps from a same coil. This is not specifically limited in this embodiment of this application. A capacitor C1 is connected in parallel to two ends of a tap of the secondary coil L2. The capacitor C1 and the secondary coil L2 form a parallel resonant circuit. The transmitter circuit 01 converts a direct current provided by a power supply 20 into an alternating current and provides the alternating current to the primary coil L1. The primary coil L1 transfers electric energy to the secondary coil L2 in the first receiver circuit 021 and the secondary coil L3 in the second receiver circuit 022 according to an electromagnetic coupling principle. For a specific circuit structure of the transmitter circuit 01, refer to related descriptions of an embodiment shown in FIG. 8.

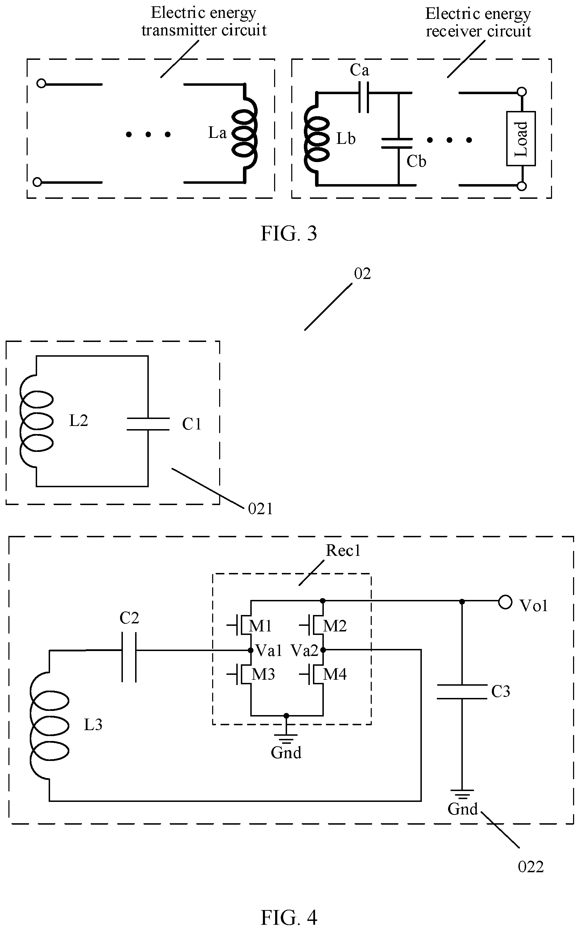

During specific implementation, after being connected to the power supply, the transmitter circuit 01 usually works in a first working mode. The first working mode is used to transmit a first electromagnetic induction signal to identify a receiver circuit. After identifying the receiver circuit, the transmitter circuit 01 enters a second working mode. The second working mode is used to transmit a second electromagnetic induction signal to charge a load. By setting the first working mode and the second working mode for the transmitter circuit 01, energy consumption of the transmitter circuit 01 can be reduced, and a service life of the transmitter circuit 01 can be prolonged. In the first working mode, the transmitter circuit 01 may continuously or periodically generate a low-power alternating current on the primary coil L1. In other words, the alternating current is generated on the primary coil L1, and the current is small. After a terminal device is disposed on a wireless charging base, based on electromagnetic induction, the electric energy on the primary coil L1 is transferred to the secondary coil L2 in the first receiver circuit 021 and the secondary coil L3 in the second receiver circuit 022. Because the energy transferred by the primary coil L1 to the secondary coil L2 and the secondary coil L3 is weak in this case, a voltage in the second receiver circuit cannot drive each transistor in a rectifier bridge of the second receiver circuit 022 to be turned on (for a specific structure of the second receiver circuit 022, refer to related descriptions of an embodiment shown in FIG. 4). In other words, a closed loop cannot be formed. After the secondary coil L2 obtains the energy from the primary coil L1, an induced current is generated on the secondary coil L2. Because the capacitor C1 is connected in parallel to two ends of the secondary coil L2, in other words, the secondary coil L2 and the capacitor C1 form a parallel resonant loop, a current flows through the parallel resonant loop. For the parallel resonant loop, the induced current on the secondary coil L2 is higher than a total current input by the circuit, so that the current on the secondary coil L2 in turn affects a current flowing through the primary coil L1, and changes an original current amplitude on the primary coil L1. After a change of the amplitude is detected by the transmitter circuit 01, the transmitter circuit 01 is triggered to switch from a first working state to a second working state. It should be noted that, the transmitter circuit 01 is triggered to switch from the first working state to the second working state according to the Qi protocol introduced by a standard organization of low frequency wireless power transmission (WPC, wireless power consortium). Specifically, according to a specification in the Qi protocol, in the first receiver circuit 021 shown in FIG. 2, a resonance frequency of the parallel resonant circuit formed by the secondary coil L2 and the capacitor C1 is 1 MHz. In other words, when an induced current in the parallel resonant circuit whose resonance frequency is about 1 MHz in turn affects the primary coil L1, and only after the effect is detected by the transmitter circuit 01, the transmitter circuit 01 can be triggered to enter the second working mode. When an induced current in another parallel resonant circuit whose resonance frequency is far away from 1 MHz in turn affects the primary coil L1, the transmitter circuit 01 is not triggered to enter the second working mode. In addition, the transmitter circuit 01 may go through a plurality of procedures such as communication identification when switching from the first working state to the second working state. For example, a control circuit (or a controller) is disposed in each of the transmitter circuit 01 and the second receiver circuit 022. To determine that the receiver circuit 02 instead of another object (for example, a magnet block) changes the original current amplitude on the primary coil L1, after detecting the change of the original current amplitude on the primary coil L1, the control circuit in the transmitter circuit 01 further controls the transmitter circuit 01 to transmit an electromagnetic induction signal of a specific frequency according to a specification in the Qi protocol. After detecting the electromagnetic induction signal of the specific frequency, the control circuit in the second receiver circuit 022 controls the second receiver circuit 022 to transmit an electromagnetic induction signal of a specific amplitude to the transmitter circuit 01 as a response. After completing power transmission preparation with the second receiver circuit 022 based on the protocol, the transmitter circuit 01 may enter the second working state.

In a conventional electric energy receiver circuit, a secondary coil Lb, a capacitor Ca, and a capacitor Cb are usually disposed. The capacitor Cb is connected in parallel to two ends of the secondary coil Lb by using the capacitor Ca, and a load is coupled to an output end of the electric energy receiver circuit, as shown in FIG. 3. In addition, according to the specification in the Qi protocol, a parallel resonance frequency of a parallel resonant circuit formed by the secondary coil Lb and the capacitor Cb is 1 MHz. After a primary coil La transfers electric energy to the secondary coil Lb, the secondary coil Lb and the capacitor Cb form a parallel resonant loop. When an electric energy transmitter circuit works in a first working mode, the closed current loop is identified by the electric energy transmitter circuit. However, when the electric energy transmitter circuit works in a second working mode, current oscillation occurs in the parallel resonant circuit that has the resonance frequency of 1 MHz and that is formed by the secondary coil Lb and the capacitor Cb. Usually, a control circuit in the electric energy receiver circuit controls a transistor in a rectifier bridge to be turned on or off by detecting a current in the electric energy receiver circuit. A periodicity and an amplitude of the oscillation current generated when the parallel resonance frequency is 1 MHz are easily to be mistakenly detected by the control circuit, and the transistor in a rectifier bridge is turned on or off at improper time. Therefore, stability of the rectifier bridge is affected.

In embodiments of this application, the first receiver circuit 021 and the second receiver circuit 022 are disposed. In other words, a part used to respond to the transmitter circuit 01 to be identified by the transmitter circuit 01 is independent of a transmission path used to transmit the electric energy to the load, so that generation of a parallel resonant loop on the transmission path that is in the receiver circuit and that outputs the electric energy to the load can be avoided. Alternatively, a resonance frequency of a parallel resonance loop generated on a transmission path that is in the receiver circuit and that outputs the electric energy to the load is set to a value away from 1 MHz, to help improve stability of the receiver circuit.

Based on the application scenario shown in FIG. 1 and the schematic structural diagram of the wireless charging device shown in FIG. 2, further refer to FIG. 4. FIG. 4 is a schematic structural diagram of a receiver circuit 02 according to an embodiment of this application.

As shown in FIG. 4, the receiver circuit 02 includes a first receiver circuit 021 and a second receiver circuit 022. The first receiver circuit 021 includes a secondary coil L2 and a capacitor C1. For a specific working principle of the first receiver circuit 021, refer to the related descriptions in the embodiment shown in FIG. 2. Details are not described herein again. In addition to a secondary coil L3, the second receiver circuit 022 further includes a capacitor C2, a rectifier bridge Reel, and a capacitor C3. The rectifier bridge Reel includes a first input end Va1, a second input end Va2, and an output end Vo1. A first tap of the secondary coil L3 is coupled to the first input end Va1 of the rectifier bridge Reel by using the capacitor C2, and a second tap of the secondary coil L3 is coupled to the second input end Va2 of the rectifier bridge Reel. The capacitor C3 is coupled between the output end Vo1 of the rectifier bridge Rec1 and a common ground Gnd. The output end Vo1 of the rectifier bridge Rec1 is coupled to the load shown in FIG. 2 for outputting electric energy to the load. In the second receiver circuit 022, after the primary coil L1 shown in FIG. 2 transfers the electric energy to the secondary coil L3, a periodic alternating current is generated on the secondary coil L3. The alternating current flows through a series resonant circuit formed by the secondary coil L3 and the capacitor C2, and then is provided to the rectifier bridge Reel. The rectifier bridge Reel rectifies and converts the input alternating current into a direct current and provides the direct current to the output end Vo1. A current of the output end Vo1 is filtered by the capacitor C3 and then transmitted to the DC-DC conversion circuit shown in FIG. 1. Finally the load is charged through the DC-DC conversion circuit.

In this embodiment of this application, a bridge arm of the rectifier bridge Rec1 is formed by transistors, as shown in FIG. 4. The rectifier bridge Reel includes a transistor M1, a transistor M2, a transistor M3, and a transistor M4. A first electrode of the transistor M1 and a first electrode of the transistor M2 are coupled to the output end Vo1 of the rectifier bridge Reel. A second electrode of the transistor M1 and a first electrode of the transistor M3 are coupled to the first input end Va1. A second electrode of the transistor M2 and a first electrode of the transistor M4 are coupled to the second input end Va2. A second electrode of the transistor M3 and a second electrode of the transistor M4 are coupled to the common ground Gnd. In addition, the second receiver circuit 022 further includes a control circuit. The control circuit is configured to control the transistor M1, the transistor M2, the transistor M3, and the transistor M4 to be turned on and off, to rectify the current input by the series resonant circuit formed by the secondary coil L3 and the capacitor C2. The transistor M1, the transistor M2, the transistor M3, and the transistor M4 may be NMOS field effect transistors, or may be PMOS field effect transistors. This is not limited in this embodiment of this application. When the foregoing transistors are field effect transistors, the first electrodes may be source electrodes, and the second electrodes may be drain electrodes. Alternatively, the first electrodes may be drain electrodes, and the second electrodes may be source electrodes. During specific working, the control circuit may control each transistor to be turned on by detecting voltages at two ends of each transistor, and control each transistor to be turned off by detecting a zero-crossing current on each transistor. The following uses the transistor M1 as an example for description. When detecting a voltage of the second electrode that is in the transistor M1 and that is coupled to the first input end Va1 is higher than a voltage of the first electrode coupled to the output end Vo1, the control circuit controls the transistor M1 to be turned on. When detecting a current zero-crossing point on the transistor M1 (in other words, the current converts from a positive current to a negative current or from a negative current to a positive current), the control circuit may control the transistor M1 to be turned off. For control of another transistor by the control circuit, refer to the control of the transistor M1. Details are not described again. In addition, the control circuit may be further configured to communicate with a transmitter circuit 01 according to the Qi protocol.

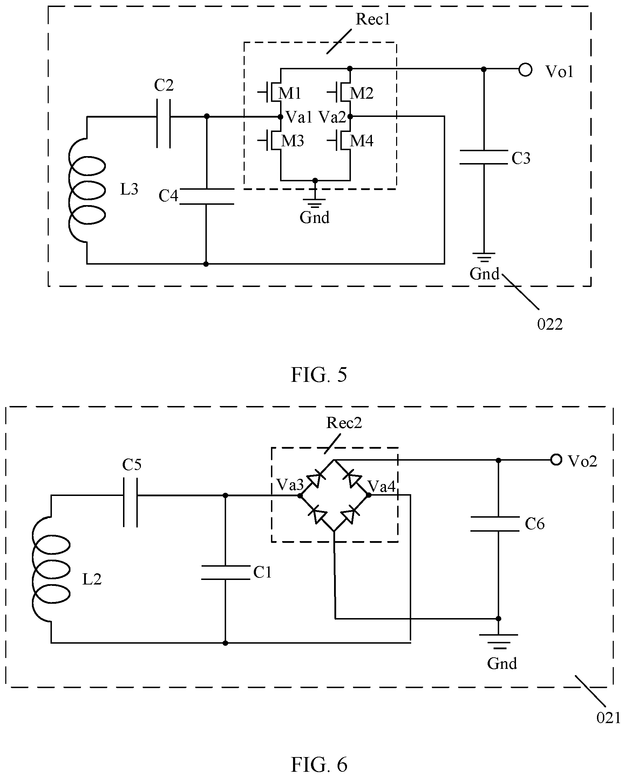

In a possible implementation, a structure of a second receiver circuit 022 may alternatively be shown in FIG. 5. In FIG. 5, the second receiver circuit 022 includes a secondary coil L3, a capacitor C2, a rectifier bridge Rec1, and a capacitor C3. A structure and a connection relationship of each component are the same as those of the related component in the second receiver circuit 022 shown in FIG. 4. For details, refer to the related descriptions about the second receiver circuit 022 shown in FIG. 4. Details are not described herein again. Different from the second receiver circuit 022 shown in FIG. 4, in FIG. 5, the second receiver circuit 022 further includes a capacitor C4. One end of the capacitor C4 is coupled to one tap of the secondary coil L3 by using the capacitor C2, and the other end of the capacitor C4 is coupled to another tap of the secondary coil L3. It should be noted that, a resonance frequency of a parallel resonant circuit formed by the capacitor C4 and the secondary coil L3 is far away from 1 MHz, and may be far higher than 1 MHz or far lower than 1 MHz. For example, the resonance frequency of the parallel resonant circuit formed by the capacitor C4 and the secondary coil L3 may be 5 MHz. By setting the resonance frequency of the parallel resonant circuit formed by the secondary coil L3 and the capacitor C4 to be far away from 1 MHz, a periodicity and an amplitude of an oscillation current generated by a parallel resonance loop can be changed. Therefore, it can be avoided that a control circuit mistakenly determines the controlling as a signal that controls a transistor in a rectifier bridge Rec1 to be turned on or off, and stability of a receiver circuit can also be improved.

Each transistor included in the rectifier bridge Rec1 shown in this embodiment of this application and the control circuit configured to control the transistor to be turned on or off may be integrated into a same integrated chip.

Because the rectifier bridge Rec1 shown in FIG. 4 and FIG. 5 include transistors, a power supply is needed to provide a proper bias voltage to each transistor for working. In addition, a drive circuit configured to drive the transistors to be turned on or off also needs the power supply to supply power. The first receiver circuit 021 may further supply power to the integrated chip to improve utilization of electric energy received by the receiver circuit. Based on this, in a possible implementation, a structure of a first receiver circuit 021 is shown in FIG. 6. In FIG. 6, in addition to a secondary coil L2 and a capacitor C1, the first receiver circuit 021 further includes a capacitor C5, a rectifier bridge Rec2, and a capacitor C6. One end of the capacitor C5 is coupled to one tap of the secondary coil L2, and the other end of the capacitor C5 is coupled to one end of the capacitor C1 and a first input end Va3 of the rectifier bridge Rec2. A second input end Va4 of the rectifier bridge Rec2 is coupled to the other end of the capacitor C1 and another tap of the secondary coil L2, and an output end Vo2 of the rectifier bridge Rec2 is used to output electric energy. The capacitor C6 is coupled between the output end Vo2 of the rectifier bridge Rec2 and a common ground Gnd. A capacitance value of the capacitor C5 is greater than a capacitance value of the capacitor C1. In addition, a resonance frequency of a series resonant circuit formed by the secondary coil L2 and the capacitor C5 needs to be 100 kHz. When a transmitter circuit 01 works in a first working mode, a primary coil L1 transfers energy to the secondary coil L2, and a current in a parallel resonant circuit formed by the secondary coil L2 and the capacitor C1 in turn affects a current in the primary coil L1. Therefore, the transmitter circuit 01 is triggered to work in a second working mode. When the transmitter circuit 0 1 works in the second working mode, a part of the energy transferred by the transmitter circuit 01 is received by the secondary coil L2, the other part of the energy transferred by the transmitter circuit 01 is received by the secondary coil L3, and the secondary coil L2 and the secondary coil L3 each generate an induced current. A series resonant circuit formed by the secondary coil L3 and the capacitor C2 transmits the induced current on the secondary coil L3 to a rectifier bridge Rec1, and the rectifier bridge Rec1 converts an alternating current into a direct current and outputs the direct current to a load. The series resonant circuit formed by the secondary coil L2 and the capacitor C5 transmits the induced current on the secondary coil L2 to the rectifier bridge Rec2, and the rectifier bridge Rec2 converts an alternating current into a direct current to supply power to the integrated chip. In this embodiment, a bridge arm of the rectifier bridge Rec2 may be a diode, as shown in FIG. 5. In another possible implementation, the bridge arm of the rectifier bridge Rec2 may alternatively be a transistor. In this case, a structure of the rectifier bridge Rec2 is the same as that of the rectifier bridge Rec 1 shown in FIG. 4. Details are not described again in this embodiment of this application.

In a conventional technology, an electric energy receiver circuit is disposed on only one secondary coil (refer to FIG. 3). If the integrated chip is disposed in the electric energy receiver circuit, energy obtained by the electric energy receiver circuit is usually used to supply power to the integrated chip. In this way, when electromagnetic induction is weak caused by a long distance between the electric energy receiver circuit and an electric energy transmitter circuit or biased placement positions of the electric energy receiver circuit and the electric energy transmitter circuit, a current in the electric energy transmitter circuit is weak, and the integrated chip cannot be driven to work. In this embodiment of this application, by using the first receiver circuit 021 to supply power to the integrated chip, a power supply capability of the integrated chip can be enhanced, so that the second receiver circuit 022 can stably supply power to the load. Further, to increase electric energy used by the secondary coil L2 to supply power to the integrated chip, in a possible implementation, a quantity of turns of the secondary coil L2 is greater than a quantity of turns of the secondary coil L3.

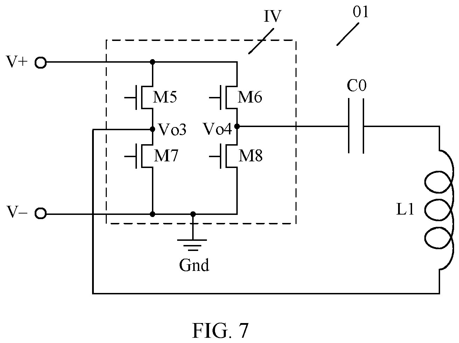

Based on the application scenario shown in FIG. 1, further refer to FIG. 7. FIG. 7 is a schematic structural diagram of a transmitter circuit 01. As shown in FIG. 7, the transmitter circuit 01 includes an inverter (Inverter, IV) and a series resonant circuit. The inverter IV includes a plurality of transistors. Specifically, as shown in FIG. 7, the inverter includes a transistor M5, a transistor M6, a transistor M7, and a transistor M8. A first electrode of the transistor M5 and a first electrode of the transistor M6 are coupled to a positive input end V+ of the transmitter circuit 01. A second electrode of the transistor M5 and a first electrode of the transistor M7 are coupled to a first output end Vo3 of the inverter. A second electrode of the transistor M6 and a first electrode of the transistor M8 are coupled to a second output end Vo4 of the inverter. A second electrode of the transistor M7 and a second electrode of the transistor M8 are coupled to a reverse input end V- of the transmitter circuit 01. It should be noted that, in some scenarios, the reverse input end may be a common ground Gnd. The series resonant circuit in the transmitter circuit 01 shown in FIG. 7 may include a capacitor C0 and a primary coil L1. One tap of the primary coil L1 is coupled to a first input end Vo3 of the inverter IV, and another tap of the primary coil L1 is coupled to a second input end Vo4 of the inverter IV by using the capacitor C0. In addition, the transmitter circuit 01 shown in FIG. 7 further includes a control circuit. The control circuit is configured to control turn-on or turn-off of each transistor which forms the inverter IV, to control a magnitude of electric energy output by the transmitter circuit 01. The control circuit is not shown in FIG. 7. During specific implementation, the control circuit controls a magnitude of a current in the series resonant circuit by controlling a switching frequency of each transistor and a duty cycle of each transistor. In addition, the control circuit may further trigger, according to the Qi protocol, switching between a first working mode and a second working mode by detecting a current change of the primary coil L1.

As shown in FIG. 7, when the transmitter circuit 01 works in the first working mode, the transistor M5 and the transistor M8 are turned on in a first time period, and the transistor M6 and the transistor M7 are turned on in a second time period. Both duration of the first time period and duration of the second time period are short. In other words, the switching frequency of each transistor is high. Therefore, the switching frequency of each transistor is far away from a resonance frequency of the series resonant circuit formed by the capacitor C0 and the primary coil L1. In this case, a current flowing through the primary coil L1 is small. In other words, the electric energy output by the transmitter circuit 01 is small. When the control circuit in the transmitter circuit 01 detects that an amplitude of the current flowing through the primary coil L 1 changes, the switching frequency of each transistor is adjusted, and the duty cycle of each transistor is adjusted. Therefore, the switching frequency of each transistor reaches the resonance frequency of the series resonant circuit formed by the capacitor C0 and the primary coil L1, and the current flowing through the primary coil L1 is increased, so that the electric energy output by the transmitter circuit 01 is increased.

An embodiment of this application further provides a terminal device. The terminal device may be a portable computer (such as a mobile phone), a notebook computer, a wearable electronic device (such as a smartwatch), a tablet computer, an augmented reality (augmented reality, AR), a virtual reality (virtual reality, VR) device, an electric toothbrush, or the like. Specifically, the terminal device shown in this application includes the receiver circuit shown in any embodiment in FIG. 1, FIG. 2, FIG. 4, FIG. 5, or FIG. 6.

Finally, it should be noted that the foregoing embodiments are merely intended for describing the technical solutions of this application, but not for limiting this application. Although this application is described in detail with reference to the foregoing embodiments, a person of ordinary skill in the art can understand that modifications may still be made to the technical solutions described in the foregoing embodiments or equivalent replacements may be made to some or all technical features thereof, without departing from the scope of the technical solutions of embodiments of this application.

## Claims

1. A wireless charging device, comprising a first receiver circuit and a second receiver circuit, wherein
the first receiver circuit comprises a parallel resonant circuit, wherein the parallel resonant circuit is configured to receive a first electromagnetic induction signal from a transmitter circuit, and form a parallel resonant loop based on the first electromagnetic induction signal to trigger the transmitter circuit to transmit a second electromagnetic induction signal; and
the second receiver circuit is coupled to a load, and is configured to receive the second electromagnetic induction signal from the transmitter circuit, generate electric energy based on the second electromagnetic induction signal, and provide the electric energy to the load to charge the load.

2. The wireless charging device according to claim 1, wherein the second receiver circuit comprises a first series resonant circuit and a first rectifier bridge;
the first series resonant circuit generates a first alternating current based on the second electromagnetic induction signal, and provides the first alternating current to the first rectifier bridge; and
the first rectifier bridge generates a first direct current based on the first alternating current, and provides the first direct current to the load.

3. The wireless charging device according to claim 2, wherein
the first rectifier bridge comprises a plurality of first transistors;
the second receiver circuit further comprises a drive circuit configured to drive the plurality of first transistors to be turned on or off; and
the drive circuit and the plurality of first transistors are integrated into a same chip.

4. The wireless charging device according to claim 3, wherein the first receiver circuit further comprises a second series resonant circuit and a second rectifier bridge;
the second series resonant circuit generates a second alternating current based on the second electromagnetic induction signal, and provides the second alternating current to the second rectifier bridge; and
the second rectifier bridge generates a second direct current based on the second alternating current to supply power to the chip.

5. The wireless charging device according to claim 4, wherein the parallel resonant circuit comprises a first secondary coil and a first capacitor; and
the first capacitor is coupled to two ends of the first secondary coil.

6. The wireless charging device according to any one of claims 2 to 5, wherein the first series resonant circuit comprises a second secondary coil and a second capacitor;
one end of the second secondary coil is coupled to a first input end of the first rectifier bridge by using the second capacitor; and
the other end of the second secondary coil is coupled to a second input end of the first rectifier bridge.

7. The wireless charging device according to claim 6, wherein the second receiver circuit further comprises a third capacitor; and
one end of the third capacitor is coupled to the one end of the second secondary coil by using the second capacitor, and the other end of the third capacitor is coupled to the other end of the second secondary coil.

8. The wireless charging device according to claim 5, wherein the second series resonant circuit comprises the first secondary coil and a fourth capacitor;
the fourth capacitor is coupled between one end of the first secondary coil and a first input end of the second rectifier bridge; and
the other end of the first secondary coil is coupled to a second input end of the second rectifier bridge.

9. The wireless charging device according to any one of claims 1 to 8, wherein the wireless charging device further comprises the transmitter circuit; and
the transmitter circuit is configured to transmit the first electromagnetic induction signal, and transmit the second electromagnetic induction signal in response to a detected change of the first electromagnetic induction signal.

10. The wireless charging device according to claim 9, wherein the transmitter circuit comprises an inverter and a third series resonant circuit;
the inverter is configured to convert a direct current input by a power supply into an alternating current and provide the alternating current to the third series resonant circuit; and
the third series resonant circuit generates the first electromagnetic induction signal and the second electromagnetic induction signal based on the alternating current output by the inverter.

11. The wireless charging device according to claim 10, wherein a third series resonance circuit comprises a primary coil and a fifth capacitor;
one end of the primary coil is coupled to a first output end of the inverter by using the fifth capacitor; and the other end of the primary coil is coupled to a second output end of the inverter.

12. A terminal device, comprising: the wireless charging device according to any one of claims 1 to 8 and a load, wherein
the load is coupled to an output end of a second receiver circuit in the wireless charging device; and
the second receiver circuit is configured to charge the load.
